Europäisches Patentamt

**European Patent Office**

**Office européen des brevets**

(11) Numéro de publication: **0 072 737**
**B1**

(12) **FASCICULE DE BREVET EUROPEEN**

(45) Date de publication du fascicule du brevet:
10.04.85

(21) Numéro de dépôt: **82401477.3**

(22) Date de dépôt: **05.08.82**

(51) Int. Cl.⁴: **B 04 B 1/06,** B 01 J 19/00,
B 01 J 19/18

(54) **Appareil à vortex pour la fabrication d'un précipité.**

(30) Priorité: **12.08.81 FR 8115603**

(43) Date de publication de la demande:
**23.02.83 Bulletin 83/8**

(45) Mention de la délivrance du brevet:
**10.04.85 Bulletin 85/15**

(84) Etats contractants désignés:
**BE DE GB**

(56) Documents cités:
**FR - A - 909 958**
**FR - A - 2 080 117**

(73) Titulaire: **COMMISSARIAT A L'ENERGIE ATOMIQUE
Etablissement de Caractère Scientifique Technique et
Industriel, 31/33, rue de la Fédération, F-75015 Paris (FR)**

(72) Inventeur: **Auchapt, Pierre, Villa 19, Allée du Romarin
Cité des Cyprès, F-30200 Bagnols sur Ceze (FR)**
Inventeur: **Ferlay, Aimé, Rue Aristide Briand,
F-30290 Laudun (FR)**

(74) Mandataire: **Mongrédien, André et al, c/o
BREVATOME 25, rue de Ponthieu, F-75008 Paris (FR)**

ACTORUM AG

# Description

La présente invention se rapporte à un appareil pour la fabrication en continu d'un précipité en faisant réagir entre eux au moins deux réactifs. Plus précisément, l'invention concerne un appareil à vortex destiné notamment à la fabrication de précipités particulièrement adhérents lors de leur formation.

On connaît déjà un appareil de précipitation comprenant une cuve cylindrique fixe à axe vertical dans laquelle les réactifs sont introduits en continu en haut de la cuve et au voisinage de son axe. Un agitateur constitué par un barreau aimanté est disposé au fond de la cuve. La rotation de ce barreau est commandée par un générateur de champ magnétique tournant disposé en dessous du fond de la cuve. La rotation de l'agitateur permet de créer un vortex qui a pour effet d'agiter le mélange et d'éloigner des parois les précipités fraîchement formés. En effet, les précipités, plus denses que la solution, se forment au voisinage de l'axe de la cuve et tendent à s'y localiser. Les précipités mûrissent ainsi au voisinage de l'axe de la cuve avant de lécher les parois de la cuve pour être évacués avec la solution par un trop-plein formé à la partie supérieure de la cuve. Un chauffage peut éventuellement être prévu à l'extérieur de la cuve si la réaction chimique l'exige.

On voit que, dans cet appareil connu, le vortex a pour effet d'éloigner des supports matériels les précipités fraîchement formés, ce qui évite l'encroûtage de l'appareil lorsque les précipités sont particulièrement adhérents. Toutefois, cet appareil présente un certain nombre d'inconvénients. Ainsi, lorsque la réaction chimique envisagée met en jeu des produits radioactifs, les limites imposées par les conditions de sûreté limitent sensiblement la capacité de ce type d'appareil. L'augmentation de la capacité nécessite donc la mise en parallèle de plusieurs appareils, ce qui a notamment pour effet de compliquer la division des alimentations et la collecte des trop-pleins. De plus, le frottement de l'agitateur sur le fond de la cuve conduit à une durée de vie relativement courte de l'appareil qui ne peut être améliorée qu'en équipant l'agitateur et le fond de la cuve de revêtements spéciaux à base de tétrafluoréthylène et d'acier inoxydable. Un tel équipement a pour effet d'accroître sensiblement le coût du précipitateur et conduit à une durée d'utilisation qui reste malgré tout limitée. D'autre part, l'évacuation directe du précipité par un trop-plein formé dans la cuve fixe s'accompagne d'une évacuation simultanée de la solution qui s'explique par le fait que les précipités sont plus denses que la solution.

D'autre part, on connaît des appareils de précipitation composés de deux canaux cylindriques fixes et coaxiaux à axe vertical, dans lesquels les réactifs sont introduits à la partie supérieure du canal central. L'agitation du mélange est obtenue au moyen de plusieurs agitateurs régulièrement répartis sur un arbre tournant disposé dans le canal central. L'arbre tournant porte une turbine à pales sous l'orifice inférieur du tube central. Cette turbine assure la remontée du précipité et de la solution dans le canal latéral, jusqu'à un trop-plein ménagé à la partie supérieure du canal latéral. Cet appareil fonctionne en discontinu, car la vitesse des liquides dans le canal latéral de sortie serait trop faible pour relever le précipité jusqu'au trop-plein. Il en résulterait un engorgement de l'appareil. De plus, les précipités ont tendance à former des lits denses entre les agitateurs.

Enfin, on connaît des appareils de précipitation composés de deux canaux cylindriques fixes et coaxiaux dans lesquels l'agitation du mélange est obtenue au moyen d'un sabre racleur qui tourne dans le canal central et subit des chocs verticaux pour assurer son décroûtage. En bas du canal central, les réactifs sont agités par une turbine qui localise un lit dense de précipité. La solution s'élève dans le canal latéral pour être évacuée par un trop-plein. Au cours de sa montée, la solution s'épure du précipité qui décante et traverse le lit dense pour être reçu à la base de l'appareil. Bien que cet appareil fonctionne en continu, il ne permet pas non plus un débit très important, car l'augmentation du débit favorise l'encroûtage du sabre. De plus, dans cette solution le précipité doit être relevé à la sortie de l'appareil, et il faut noter que l'augmentation du débit défavorise également le relevage du précipité.

La présente invention a pour objet la réalisation d'un appareil à vortex particulièrement adapté à la fabrication en continu d'un précipité relativement adhérent, bien que non limité à cette application, ce précipitateur ne présentant pas les inconvénients des précipitateurs de la technique antérieure. Ainsi, la présente invention a principalement pour objet la réalisation d'un précipitateur de grande capacité ayant une durée de vie particulièrement longue et assurant à la fois le relevage et la séparation des précipités, bien que leur densité soit supérieure à celle de la solution, en effectuant un recyclage important de la solution et sans affecter la durée de précipitation. L'invention a également pour objet la réalisation d'un appareil dans lequel les réactifs en présence peuvent être chauffés ou refroidis si nécessaire par des moyens disposés à l'intérieur même de l'appareil, ce qui n'était pratiquement pas possible dans les précipitateurs de la technique antérieure.

Dans ce but et conformément à la présente invention, il est proposé un appareil à vortex pour la fabrication d'un précipité en faisant réagir entre eux au moins deux réactifs, comprenant un bol à axe vertical, un cylindre fixe disposé coaxialement à l'intérieur du bol pour définir avec ce dernier une chambre annulaire de relevage qui communique en dessous de l'extrémité inférieure du cylindre avec une chambre de réaction définie à l'intérieur de ce dernier, des canalisations d'entrée des réactifs débouchant dans la partie supérieure de la chambre de réaction à proximité de l'axe du bol, au moins un déversoir disposé à l'extrémité supérieure de la chambre de relevage et une turbine disposée dans la partie inférieure de la chambre de réaction, de façon à créer un vortex dans cette dernière et à assurer la remontée d'une partie du précipité dans la chambre de relevage, caractérisé en ce que ledit appareil étant destiné à la fabrication en continu d'un précipité, le bol est un bol tournant, le déversoir ainsi que la turbine étant fixés à ce bol.

Grâce à ces caractéristiques, on voit que la chambre de réaction définie à l'intérieur du cylindre fixe de l'appareil selon l'invention se comporte pratiquement de la même manière que la chambre définie dans la cuve fixe de l'appareil de précipitation à vortex de la technique antérieure. Cependant, la présence d'un bol tournant à l'extérieur du cylindre fixe permet de produire un effet centrifuge dans la chambre annulaire définie entre le bol et le cylindre. Cet effet tend à agglomérer les précipités plus denses que la solution à l'extérieur de cet espace, la solution venant seule en contact avec la paroi externe du cylindre fixe. Ce contact a pour effet de freiner le liquide et de le faire redescendre le long de cette paroi. Ce recyclage du liquide permet le relevage du précipité en créant un courant ascendant à la périphérie externe de l'espace annulaire. En accélérant la rotation du bol tournant, il est même possible de vider presque complètement l'appareil.

De préférence, les aubes de la turbine fixée sur le fond du bol tournant comprennent une partie située au-dessus de l'extrémité inférieure du cylindre, de façon à assurer un recyclage d'une partie du précipité dans la chambre de réaction, et une partie située en dessous de l'extrémité inférieure du cylindre, de façon à assurer la remontée d'une partie du précipité dans la chambre de relevage.

En pratique, l'appareil à vortex selon l'invention comprend de préférence une enceinte externe solidaire du cylindre fixe et supportant le bol tournant, ainsi que des moyens pour entraîner ce dernier en rotation, l'enceinte externe comportant un collecteur annulaire dans lequel débouche le déversoir et une canalisation de sortie communiquant avec le collecteur. Dans l'hypothèse où les produits traités dans le précipitateur sont des produits radioactifs, cette enceinte peut également assurer l'isolement neutronique de l'appareil.

Conformément à un mode de réalisation préféré de l'invention, le cylindre fixe comprend des logements dans lesquels sont reçus des moyens de chauffage, des moyens de refroidissement et/ou des moyens de contrôle. Ces opérations de chauffage de refroidissement et de contrôle peuvent ainsi être effectuées directement à l'intérieur de la solution et non pas de l'extérieur de l'appareil, comme c'est généralement le cas dans les appareils de la technique antérieure.

Selon une caractéristique secondaire de l'invention, la face externe du cylindre fixe peut être munie de filets canalisant vers le bas le liquide qui redescend dans la chambre de relevage à proximité du cylindre par suite du freinage résultant de l'immobilité de ce dernier.

Afin d'accélérer le relevage du précipité, la face interne du bol tournant est de préférence évasée vers le haut. En pratique, la face interne du bol tournant peut faire, dans sa partie basse, un angle supérieur à 7° avec la verticale et, sur le reste de sa hauteur, un angle d'environ 1° avec la verticale.

On décrira maintenant, à titre d'exemple non limitatif, un mode de réalisation particulier de l'invention en se référant aux dessins annexés dans lesquels:

la fig. 1 est une vue en coupe schématique d'un appareil de précipitation à vortex réalisé conformément aux enseignements de la présente invention,

la fig. 2 est une vue en coupe à plus grande échelle de la partie supérieure de l'appareil de la fig. 1, et

la fig. 3 est une vue en coupe à plus grande échelle de la partie inférieure de l'appareil de la fig. 1.

L'appareil représenté sur les figures est particulièrement adapté à la fabrication d'un précipité en milieu radioactif. A cet effet, il comprend une enceinte en plusieurs parties 10a, 10b, ces parties étant réalisées respectivement en carbure de bore et en polythène afin d'assurer l'isolement du bol vis-à-vis des particules $\alpha$ et des neutrons. La partie interne 10a de l'enceinte définit un évidement 12 présentant une configuration cylindrique à axe vertical. Cet évidement se prolonge à son extrémité inférieure par un orifice de purge 14. Un bol tournant 16 est disposé coaxialement à l'intérieur de l'évidement 12. Ce bol 16 comprend une paroi latérale 18 et un fond 20. La paroi latérale 18 est prolongée vers le haut par une partie élargie 21 montée de façon tournante dans la partie 10a par l'intermédiaire d'au moins un palier 22.

Dans le mode de réalisation représenté, le palier 22 est unique et le fond 20 du bol 16 se prolonge vers le bas pour être reçu de façon tournante par l'intermédiaire d'un second palier 28 dans une nacelle 24 solidarisée de la partie 10a de l'enceinte par des ailettes 26. Dans un autre mode de réalisation non représenté, le palier 28 ainsi que la nacelle 24 peuvent être supprimés, le palier 22 étant alors doublé. Cette solution présente toutefois l'inconvénient de requérir un équilibrage du bol.

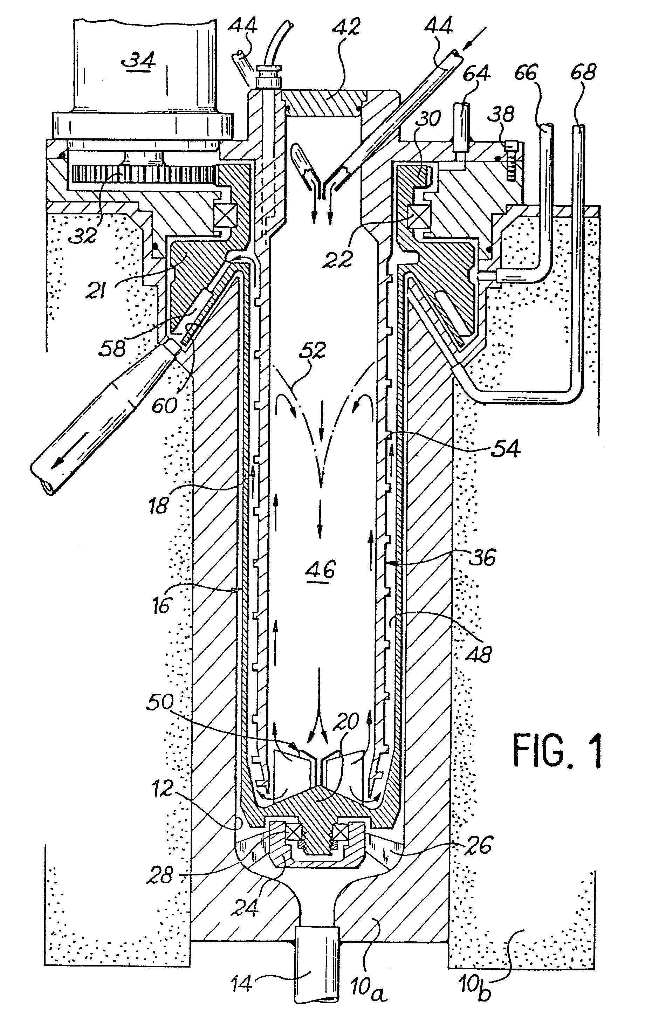

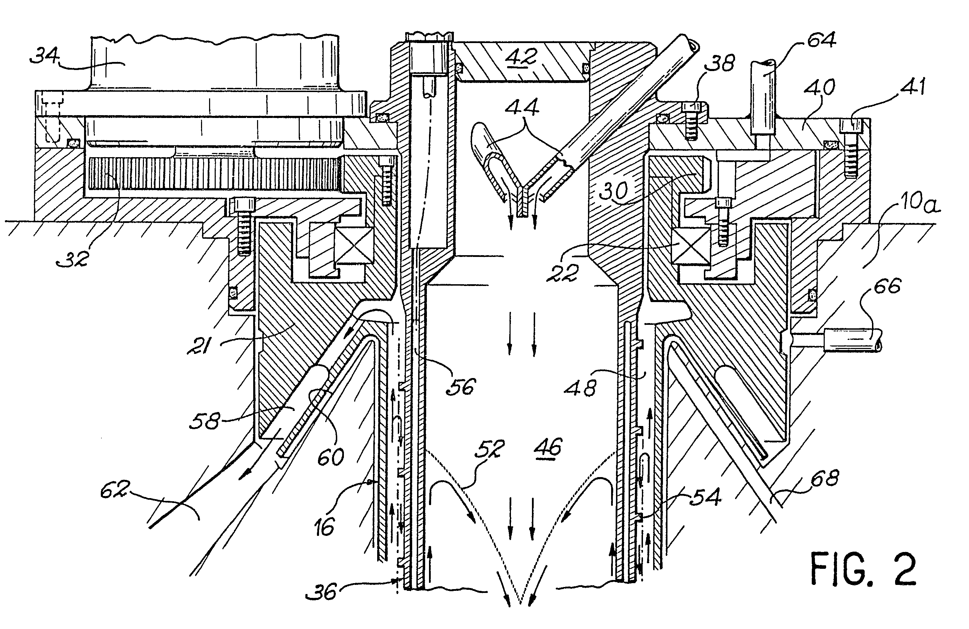

On voit sur les fig. 1 et 2 que la partie supérieure 21 du bol 16 définit aussi une couronne dentée 30 qui s'engrène sur un pignon 32 dont l'axe vertical est parallèle à l'axe du bol 16. L'arbre du pignon 32 est entraîné en rotation par un moteur 34 fixé sur l'enceinte de l'appareil.

Un cylindre creux 36 est fixé par exemple par des vis 38 à l'extrémité supérieure de l'enceinte, coaxialement au bol 16. Ces vis 38 traversent une bride 40 qui recouvre l'extrémité supérieure 21 du bol 16, pour être fixée par des vis 41 à l'enceinte 10. L'extrémité supérieure du cylindre creux 36 est obturée par un bouchon 42. Des canalisations d'alimentation oblique 44 traversent la paroi latérale du cylindre 36 pour venir déboucher à l'intérieur et à l'extrémité supérieure de celui-ci, à proximité de son axe vertical.

Comme le montrent les figures, le cylindre fixe 36 s'étend sur la plus grande partie de la longueur du bol tournant 16 pour se terminer à proximité du fond 20. Ainsi, une chambre de réaction 46 est définie à l'intérieur du cylindre fixe 36 et une chambre annulaire de relevage 48 est définie entre le bol tournant 18 et le cylindre fixe 36. Ces chambres communiquent par un passage 49 entre l'extrémité inférieure du cylindre 36 et le fond 20 du bol tournant.

Afin d'agiter le mélange contenu dans la chambre de réaction 46 et de favoriser le relevage du précipité dans la chambre annulaire 48, le fond 20 du bol tournant 16 porte une turbine 50 constituée par des aubes disposées dans des plans verticaux et radialement par rapport à l'axe du bol et la cuve. Plus précisément, on voit que les aubes de la turbine 50 comprennent une partie située au-dessus de l'extrémité inférieure du cylindre fixe 36 et une partie située en dessous de cette extrémité. La turbine 50 assure ainsi la création d'un vortex représenté schématiquement en 52 sur les fig. 1 et 2 dans la chambre de réaction 46. De plus, la turbine 50 permet l'éjection d'une partie du mélange dans la chambre annulaire 48.

Pour faciliter l'évacuation du précipité vers la chambre annulaire 48, la paroi interne du fond 20 du bol tournant 16 présente la forme d'un cône dont la pointe est dirigée vers le haut. De plus, la remontée du précipité dans l'espace annulaire 48 est facilitée par le fait que la paroi interne de la paroi latérale 18 du bol tournant est légèrement évasée vers le haut. Plus précisément, la partie inférieure de cette paroi est inclinée par rapport à la verticale selon un angle supérieur à 7° sur une hauteur sensiblement égale à la hauteur de la turbine 50. L'inclinaison du reste de la paroi est plus faible et de préférence voisine de 1°. Cette inclinaison limitée se justifie à la fois par le fait que la remontée du précipité dans la chambre annulaire 48 ne résulte pas seulement de cette caractéristique, comme on va le voir par la suite, et par le fait qu'une inclinaison plus importante augmenterait l'encombrement du précipitateur dans des conditions qui ne sont pas satisfaisantes, notamment du point de vue de la sûreté, lorsque les réactifs traités présentent un caractère radioactif.

Afin de faciliter le recyclage de la solution qui constitue, comme on le verra par la suite, l'élément principal assurant la remontée du précipité dans l'espace annulaire 48, la surface externe du cylindre fixe 36 peut être munie sur toute sa hauteur d'une nervure hélicoïdale 54 canalisant la descente de la solution le long de cette surface.

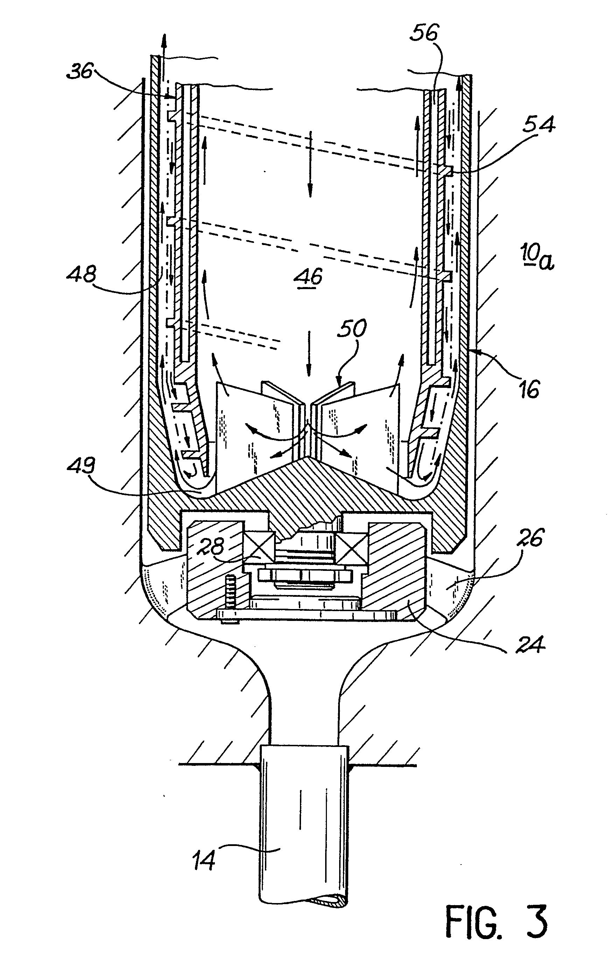

La réaction chimique de précipitation qui s'effectue à l'intérieur de l'appareil décrit peut nécessiter selon le cas un chauffage ou un refroidissement des réactifs. Il peut également être nécessaire de contrôler la réaction au moyen de sondes appropriées. A cet effet, et comme l'illustrent en particulier les fig. 2 et 3, des logements 56 sont formés sur toute la hauteur du cylindre fixe 36, par exemple en munissant celui-ci d'une double paroi. En plus des moyens de refroidissement, des résistances électriques de chauffage et des sondes de contrôle, les logements 56 peuvent également servir à loger une tuyauterie de vidange ou du matériau neutrophage lorsque la nature des réactifs le justifie.

Comme le montrent les fig. 1 et 2, l'extrémité supérieure de la chambre annulaire 48 forme un trop-plein qui débouche dans des déversoirs 58 formés dans la partie élargie 21 du bol tournant 16 et dont l'un seulement est représenté sur la figure. L'extrémité inférieure de ces déversoirs débouche dans un collecteur annulaire 60 formé dans la partie 10a de l'enceinte externe. Ce collecteur annulaire 60 présente une section en forme de V et son fond est muni d'au moins une canalisation de sortie 62 traversant l'enceinte externe pour acheminer le précipité formé à l'extérieur de l'appareil.

Enfin, des tuyauteries 64, 66 et 68 traversent différentes parties de l'enceinte externe pour déboucher respectivement dans l'espace contenant la roue dentée 30, à la partie supérieure du collecteur annulaire 60 et à l'extrémité supérieure de l'espace annulaire défini entre le bol tournant 16 et l'enceinte externe. Ces tuyauteries sont destinées au nettoyage et à la décontamination de l'appareil lors de son application au traitement de réactifs radioactifs.

L'appareil qui vient d'être décrit en se référant aux fig. 1 à 3 fonctionne de la façon suivante.

Chacun des réactifs est introduit à l'extrémité supérieure de la chambre de réaction 46 et au voisinage de l'axe de ce dernier par l'une des canalisations d'entrée 44. Cette introduction se fait en continu. La rotation du bol 16 et de la turbine 50 a pour effet de créer un vortex représenté schématiquement en 52. Ce vortex assure le mélange des réactifs et l'acheminement du précipité formé vers le bas et selon l'axe de l'appareil, comme le montrent les flèches sur la fig. 1. Le précipité fraîchement formé se trouve ainsi éloigné des parois pendant une durée suffisante pour assurer son mûrissement. Comme ce mûrissement s'accompagne d'une diminution sensible de l'adhérence du précipité, celui-ci est devenu relativement peu adhérent lorsqu'il parvient au niveau de la turbine 50. A ce niveau, on voit sur les fig. 1 et 3 qu'une partie du précipité remonte avec la solution dans la chambre 46 le long de la paroi interne du cylindre fixe 36 avant de redescendre à nouveau le long de l'axe sous l'effet du vortex, comme l'illustrent les flèches. Une autre partie du précipité et de la solution est évacuée latéralement par la turbine 50 dans le passage 49, puis dans la chambre annulaire 48. Par suite de la légère inclinaison de la face interne de la paroi latérale 18 du bol tournant, la force radiale à laquelle est soumise le précipité sous l'action de la turbine 50 donne naissance à une composante verticale dirigée vers le haut qui tend à faire monter le précipité le long de cette paroi. De plus, la rotation du bol 16 soumet le précipité en solution à une force centrifuge qui tend à plaquer le précipité, plus dense que la solution, contre la face interne de la paroi 18 du bol tournant. La solution se trouve ainsi localisée dans la partie de l'espace annulaire 48 la plus proche de la face externe du cylindre fixe 36. L'immobilité de ce dernier conduit à freiner la solution qui redescend alors le long du cylindre 36 sous l'effet des forces de gravité. Cette descente de la solution est canalisée par la nervure hélicoïdale 54. A cet effet, la nervure 54 présente de préférence un pas à gauche lorsque le sens de rotation du bol tournant 16 est le sens trigonométrique qui correspond au sens du vortex naturel. Cette circulation descendante de la solution le long de la face externe du cylindre fixe 36 assure une circulation bouclée des liquides dans l'espace annulaire 48, comme le montrent les flèches sur les fig. 2 et 3. Cette circulation bouclée assure donc la montée du précipité dans l'espace annulaire 48. De plus, cette circulation a aussi pour effet de nettoyer les parois et de diminuer la charge statique créée par la rotation du bol. Ainsi, le précipité et seulement une faible partie de la solution sont évacués par les déversoirs 58 qui tournent avec le bol 16. Le précipité tombe alors dans le collecteur fixe 60 d'où il est évacué vers l'extérieur de l'appareil par la canalisation 62. Celle-ci étant placée à la partie supérieure de l'appareil, il n'est pas nécessaire de procéder à un relevage ultérieur du précipité.

Pour que le vortex 52 remplise correctement sa fonction, la vitesse de rotation du bol 16 doit être supérieure à 200 tr/min. De préférence, on choisira une vitesse comprise entre 250 et 400 tr/min.

Lorsqu'un cycle de précipitation est terminé et qu'il est nécessaire de vider l'appareil, la vitesse de rotation du bol 16 est augmentée jusqu'à une valeur voisine de 1000 tr/min. Le précipitateur se vide ainsi presque totalement, notamment grâce à l'inclinaison de la paroi interne du bol. Cette vidange totale est facilitée par un changement du sens de rotation (sens inverse du sens trigonométrique) qui ajoute l'effet d'hélice à l'effet centrifuge.

Lorsque la réaction de précipitation s'effectue à une température différente de la température ambiante, on a vu que la chaleur nécessaire peut être fournie par des résistances électriques placées dans les logements 56 du cylindre fixe. La température obtenue peut être régulée par des thermocouples également placés dans les logements 56.

La description qui précède montre que le précipitateur selon l'invention présente les avantages des précipitateurs connus à vortex tout en assurant un relevage du précipité et sa séparation d'avec la solution.

## Revendications

1. Appareil à vortex pour la fabrication d'un précipité en faisant réagir entre eux au moins deux réactifs, comprenant un bol (16) à axe vertical, un cylindre fixe (36) disposé coaxialement à l'intérieur du bol pour définir avec ce dernier une chambre annulaire de relevage (48) qui communique en dessous de l'extrémité inférieure du cylindre avec une chambre de réaction (46) définie à l'intérieur de ce dernier, des canalisations (44) d'entrée des réactifs débouchant dans la partie supérieure de la chambre de réaction à proximité de l'axe du bol, au moins un déversoir (58) disposé à l'extrémité supérieure de la chambre de relevage et une turbine (50) disposée dans la partie inférieure de la chambre de réaction, de façon à créer un vortex dans cette dernière et à assurer la remontée d'une partie du précipité dans la chambre de relevage, caractérisé en ce que, ledit appareil étant destiné à la fabrication en continu d'un précipité, le bol (16) est un bol tournant, le déversoir (58) ainsi que la turbine (50) étant fixés à ce bol.

2. Appareil à vortex selon la revendication 1, caractérisé en ce que les aubes de la turbine (50) comprennent une partie située au-dessus de l'extrémité inférieure du cylindre (36), de façon à assurer un recyclage d'une partie du précipité dans la chambre de réaction (46), et une partie située au-dessous de l'extrémité inférieure du cylindre, de façon à assurer la remontée d'une partie du précipité dans la chambre de relevage (48).

3. Appareil à vortex selon l'une des revendications 1 ou 2, caractérisé en ce qu'il comprend de plus une enceinte externe (10a, 10b) solidaire du cylindre fixe (36) et supportant le bol tournant (16), ainsi que des moyens (30, 32, 34) pour entraîner ce dernier en rotation, ladite enceinte externe comportant un collecteur annulaire (60) dans lequel débouche le déversoir (58) et une canalisation de sortie (62) communiquant avec le collecteur (60).

4. Appareil à vortex selon l'une des revendications précédentes, caractérisé en ce que le cylindre fixe (36) comprend des logements (56) dans lesquels sont reçus des moyens de chauffage, des moyens de refroidissement et/ou des moyens de contrôle.

5. Appareil à vortex selon l'une des revendications précédentes, caractérisé en ce que la face externe du cylindre fixe (36) est munie d'une nervure hélicoïdale (54) canalisant vers le bas le liquide qui redescend dans la chambre de relevage (48) à proximité du cylindre par suite du freinage résultant de l'immobilité de ce dernier.

6. Appareil à vortex selon l'une des revendications précédentes, caractérisé en ce que la face interne du bol tournant (16) est évasée vers le haut.

7. Appareil à vortex selon la revendication 6, caractérisé en ce que la face interne du bol tournant (16) fait, dans la partie basse, un angle supérieur à 7° avec la verticale et, sur le reste de sa hauteur, un angle d'environ 1° avec la verticale.

8. Appareil selon l'une des revendications précédentes, caractérisé en ce que le fond du bol tournant (16) est en forme de cône dont la pointe est dirigée vers le haut.

## Patentansprüche

1. Wirbler für die Herstellung eines Niederschlages durch Reagieren wenigstens zweier Reagenzien miteinander, enthaltend einen Mantel (16) mit vertikaler Achse, einen koaxial im Inneren des Mantels angeordneten festen Zylinder (36), der mit dem Mantel eine ringförmige Staukammer (48) begrenzt, die unterhalb des unteren Endes des Zylinders mit einer Reaktionskammer (46) in Verbindung steht, die im Inneren des Zylinders ausgebildet ist, wobei Eintrittskanäle (44) für die Reagenzien in den oberen Teil der Reaktionskammer nahe der Mantelachse münden, wenigstens einen Überlauf (58), der am oberen Ende der Staukammer angeordnet ist, und eine Turbine (50), die im unteren Teil der Reaktionskammer angeordnet ist, um in letzterer einen Wirbel hervorzurufen und einen Wiederaufstieg eines Teils des Niederschlages in der Abscheidekammer sicherzustellen, dadurch gekennzeichnet, dass der Apparat zur kontinuierlichen Herstellung eines Niederschlages bestimmt ist, wozu der Mantel (16) ein drehender Mantel ist und der Überlauf (58) sowie die Turbine (50) an dem Mantel befestigt sind.

2. Wirbler nach Anspruch 1, dadurch gekennzeichnet, dass die Schaufeln der Turbine (50) einen Abschnitt aufweisen, der über dem unteren Ende des Zylinders (36) angeordnet ist, um eine Drehzirkulierung eines Anteils des Niederschlages in der Reaktionskammer (46) sicherzustellen, und einen Abschnitt aufweisen, der unterhalb des unteren Endes des Zylinders angeordnet ist, um den Wiederaufstieg eines Anteils des Niederschlages in der Abscheidekammer (48) sicherzustellen.

3. Wirbler nach einem der Ansprüche 1 oder 2, dadurch gekennzeichnet, dass er weiterhin einen äusseren Behälter (10a, 10b) aufweist, der fest mit dem festen Zylinder (36) verbunden ist und den drehenden Mantel (16) sowie Einrichtungen (30, 32, 34) aufweist, um letzteren in Rotation zu versetzen, wobei der äussere Behälter einen ringförmigen Sammler (60) aufweist, in den der Überlauf (58) und ein Austrittskanal (62) münden, der mit dem Sammler (60) in Verbindung steht.

4. Wirbler nach einem der vorhergehenden Ansprüche, dadurch gekennzeichnet, dass der feste Zylinder (36) Aufnahmeeinrichtungen aufweist, in welchen Heizeinrichtungen, Kühleinrichtungen. und/oder Steuereinrichtungen angeordnet sind.

5. Wirbler nach einem der vorhergehenden Ansprüche, dadurch gekennzeichnet, dass die Aussenfläche des festen Zylinders (36) mit einer schraubenlinienförmigen Rippe (54) versehen ist, die die Flüssigkeit nach unten leitet, die in der Staukammer (48) nahe dem Zylinder infolge der aus der Unbeweglichkeit des letzteren resultierenden Bremsung wieder nach unten steigt.

6. Wirbler nach einem der vorhergehenden Ansprüche, dadurch gekennzeichnet, dass die Innenfläche des rotierenden Mantels (16) nach oben hin erweitert ist.

7. Wirbler nach Anspruch 6, dadurch gekennzeichnet, dass die Innenfläche des drehenden Mantels (16) im unteren Bereich einen Winkel von mehr als 7° mit der Vertikalen einschliesst und auf dem Rest seiner Höhe mit der Vertikalen einen Winkel von ungefähr 1° einschliesst.

8. Apparat nach einem der vorhergehenden Ansprüche, dadurch gekennzeichnet, dass der Boden des rotierenden Mantels (16) die Form eines Konus hat, dessen Spitze nach oben weist.

## Claims

1. Vortex apparatus for formation of a precipitate by reaction of at least two reagents, comprising a bowl (16) with a vertical axis, a fixed cylinder (36) located coaxially within the interior of the bowl to define, with said latter, an annular lifting chamber (48) whose lower end communicates at the bottom of the cylinder with a reaction chamber (46) defined in the interior of said latter, inlets (44) for the reagents opening into the upper part of the reaction chamber near the axis of the bowl, at least one weir (58) located at the upper end of the lifting chamber, and a turbine (50) located in the lower part of the reaction chamber, whereby to produce a vortex within the latter and to produce lifting of a part of the precipitate in the lifting chamber, characterized in that, said apparatus being adapted to continuous formation of a precipitate, the bowl (16) is a rotatable bowl and the weir (58) and the turbine (50) are fixed to said bowl.

2. Vortex apparatus according to Claim 1, characterized in that the vanes of the turbine (50) have a lower part located above the lower end of the cylinder (36), whereby to produce recycling of a part of the precipitate within the reaction chamber (46) and a part located below the lower end of the cylinder, whereby to produce lifting of a part of the precipitate within the lifting chamber (48).

3. Vortex apparatus according to Claim 1 or 2, characterized in that additionally comprises an external container (10a, 10b) unitary with the fixed cylinder (36) and supporting the rotatable bowl (16) as well as means (30, 32, 34) for rotating said latter, said external container comprising an annular collector (60) into which the weir (58) open, and an outlet tube (62) communicating with the collector (60).

4. Vortex apparatus according to any one of the preceding claims, characterized in that the fixed cylinder (36) comprises housings (56) into which heating means, cooling means and/or control means are received.

5. Vortex apparatus according to any one of the preceding claims, characterized in that the external surface of the fixed cylinder (36) has a helical rib (54) downwardly channelling any liquid which falls within the lifting chamber (48) near the cylinder as a result of braking resulting from immobility of the latter.

6. Vortex apparatus according to any one of the preceding claims, characterized in that the internal surface of the rotatable bowl (16) is flared upwardly.

7. Vortex apparatus according to Claim 6, characterized in that the internal surface of the rotatable bowl (16) has an angle with the vertical greater than 7° at its lower end, and an angle with the vertical of around 1° over the rest of its height.

8. Apparatus according to any one of the preceding claims, characterized in that the bottom of the rotatable bowl (16) is in the form of a cone with an upwardly directed vertex.

FIG. 1

FIG. 2

FIG. 3